# EUROPÄISCHE PATENTSCHRIFT

(11) **EP 1 104 072 B1**
(45) Veröffentlichungstag und Bekanntmachung des Hinweises auf die Patenterteilung: **16.08.2006**
(21) Anmeldenummer: 00124133.0
(22) Anmeldetag: 07.11.2000
(51) Int. Cl.: H02H 7/085

(54) **Blockierschutzschalter für einen Elektromotor**
Anti-lock switch for an electric motor
Commutateur antiblocage pour un moteur électrique

(30) Priorität: 13.11.1999 DE 19954659
(43) Veröffentlichungstag der Anmeldung: 30.05.2001
(73) Patentinhaber: Vorwerk & Co. Interholding GmbH, 42275 Wuppertal (DE)
(72) Erfinder: Fieseler, Martin, 45134 Essen (DE)
(74) Vertreter: Müller, Enno

(56) Entgegenhaltungen:
- DE-U- 8 706 788
- US-A- 4 107 584

## Beschreibung

Die Erfindung betrifft eine Blockierschutzschaltung für einen Elektromotor, insbesondere einen Elektromotor eines Haushaltsgerätes, wie etwa eines Staubsaugers, wobei nachgeschaltet zu einem ersten Kondensator und vorgeschaltet zu einem zweiten Kondensator ein Triac vorgesehen ist, wobei weiter dem Triac ein erster Diac vorgeschaltet ist.

Blockierschutzschaltungen dienen zur Abschaltung eines Elektromotors bei Überschreiten eines Strom-Grenzwertes. So können bspw. Teppichfransen, welche mit Hilfe eines Elektrobürsten-Vorsatzgerätes eines Staubsaugers abgesaugt werden, zu einem Blockieren der Bürstenwalzen und damit einhergehend zu einem Blockieren des diese Bürstenwalzen antreibenden Elektromotors führen. Um hier den Elektromotor vor einem Überhitzen und somit vor Schaden zu bewahren, ist es bekannt, eine Blockierschutzschaltung vorzusehen. Übliche Blockierschutzschaltungen arbeiten bspw. mit einem Thermo-Schutzschalter, z. B. einem Bimetall-Schalter, oder mit einer elektronischen Schaltung, bei welcher der Blockierstrom mit aktiven Halbleiter-Bauelementen erfasst wird. Bei Überschreiten eines Grenzwertes erfolgt eine Abschaltung des Elektromotors. Hierbei wird der Motorstrom mit Hilfe eines Triacs oder Tyristors gesteuert. Die Ansteuerung des Blockierschutz-Schaltelementes erfolgt bspw. über einen speziellen integrierten Schaltkreis oder über eine komplexe Schaltung mit zahlreichen Bauelementen, wobei die Ansteuerschaltung zum Betrieb mit Energie versorgt wird.

Eine Blockierschutzschaltung der in Rede stehenden Art ist aus der DE 8706788 Ul bekannt.

Als nachteilig erweisen sich die bekannten Blockierschutzschaltungen als herstellungstechnisch aufwändig. Darüber hinaus ist zur Versorgung eine Sekundärenergie erforderlich, was mit Verlustleistungen des Elektromotors verbunden ist. Weiter erweisen sich die bekannten Schaltungen als zerstörungsempfindlich gegenüber elektrostatischer Aufladung.

Im Hinblick auf den zuvor beschriebenen Stand der Technik wird eine technische Problematik der Erfindung darin gesehen, eine Blockierschutzschaltung der in Rede stehenden Art unter Berücksichtigung der vorgenannten Nachteile verbessert auszubilden.

Diese Problematik ist zunächst und im wesentlichen beim Gegenstand des Anspruchs 1 gelöst, wobei darauf abgestellt ist, dass die Schaltung zweipolig, zwischen einem Motorpotential und dem Nullpotential ausgeführt ist und dass in einer Verbindung zum Nullpotential ein zweiter Diac angeordnet ist, welcher Teil eines Opto-Kopplers ist. Zufolge dieser Ausgestaltung erweist sich die Blockierschutzschaltung als herstellungstechnisch günstige Lösung. Zudem ist die Verlustleistung des zu überwachenden Elektromotors durch diese Ausbildung auf ein Minimum verringert, da durch die zweipolige Ausbildung auf eine Sekundärenergie verzichtet wird. Als weiter vorteilhaft erweist sich die Ausbildung als zerstörungsunempfindlich gegenüber elektrostatischer Aufladung. Zudem zeichnet sich die erfindungsgemäße Blockierschutzschaltung dadurch aus, dass dem Triac ein erster Diac vorgeschaltet ist, wobei dieser erste Diac der Zündung des Triacs dient. In einer vorteilhaften Weiterbildung ist vorgesehen, dass vor dem ersten Kondensator eine weitere Verbindung zum Nullpotential ausgebildet ist und dass in dieser Verbindung ein zweiter Diac angeordnet ist. Letzterer wird bevorzugt über den zweiten Kondensator gesteuert. Bei Erreichen eines ersten Schwellwertes des zweiten Kondensators bewirkt der zweite Diac ein Sperren des Triacs, wobei durch den dann entstehenden Spannungsabfall über den Triac der zweite Kondensator weiter geladen wird, so dass Selbsthaltung auftritt. Nach Trennen der Schaltung von der Versorgungsspannung entlädt sich der zweite Kondensator bevorzugt über in der Schaltung weiter vorgesehene Widerstände, so dass die Schaltung erneut gestartet werden kann. Bevorzugt wird weiter, dass zwischen dem Triac und dem zweiten Kondensator ein Gleichrichter angeordnet ist. Hinsichtlich der Ansteuerung des zweiten Diacs wird vorgeschlagen, dass ein Steuerelement für den zweiten Diac in der Zuleitung zum zweiten Kondensator angeordnet ist Bevorzugt wird hier eine kontaktlose Steuerung des zweiten Diacs. Als besonders vorteilhaft erweist es sich, dass in der Motorpotentialleitung ein dritter Diac angeordnet ist, zur Verhinderung der Ladung des zweiten Kondensators vor Erreichen der Zündspannung des Triacs. Im übrigen wird vorgeschlagen, dass das Steuerelement ein optoelektronisches Element ist. Schließlich erweist es sich diesbezüglich als vorteilhaft, wenn das Steuerelement und der zweite Diac in einem Opto-Koppler angeordnet sind, zur Bildung eines optoelektronischen Triacs.

Nachstehend ist die Erfindung anhand der beigefügten Zeichnung, welche lediglich ein Ausführungsbeispiel darstellt, näher erläutert. Es zeigt:
- Fig. 1: einen Elektro-Staubsauger mit einem, elektrisch antreibbare Bürsten aufweisenden Vorsatzgerät;

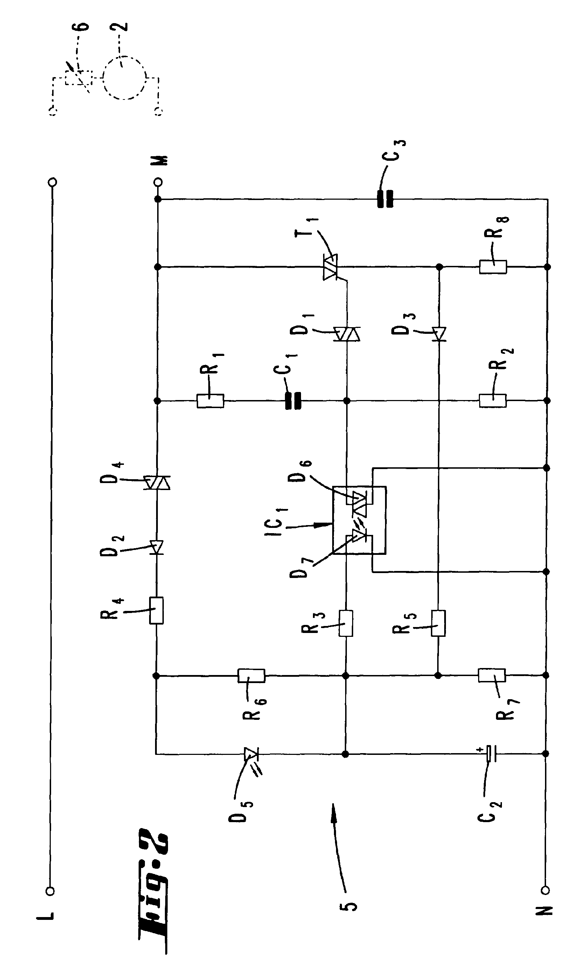

- Fig. 2: das Schaltbild der erfindungsgemäßen Blockierschutzschaltung für einen Elektromotor.

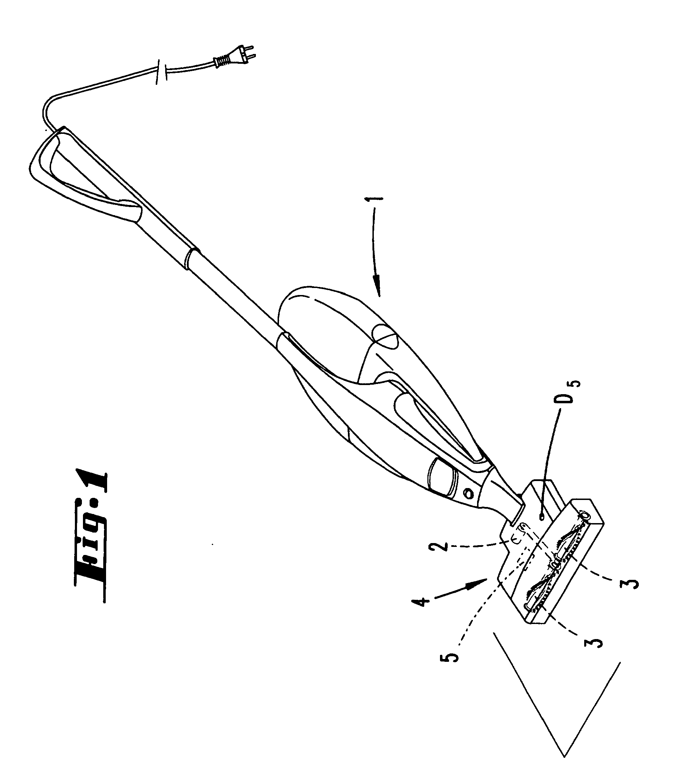

Dargestellt und beschrieben ist zunächst mit Bezug zu Fig. 1 ein Staubsauger 1 mit einem, über einen Elektromotor 2 antreibbare Bürstenwalzen 3 aufweisenden Vorsatzgerät 4.

Die Spannungsversorgung des Elektromotors 2 erfolgt über den Staubsauger 1.

Das Absaugen von Teppichfransen oder dergleichen kann zu einem Blockieren der Bürstenwalzen 3 führen. Um hier den Elektromotor 2 vor Schäden zu schützen, ist eine Blockierschutzschaltung 5 vorgesehen, welche in dem Vorsatzgerät 4 positioniert ist.

Diese Blockierschutzschaltung 5 ist als Zweipol zwischen dem Motorpotential M und dem Nullpotential N geschaltet. Zwischen dem Leistungspotential L und dem Motorpotential M ist der, die Bürstenwalzen 3 antreibende Elektromotor 2 geschaltet, welcher über einen Leistungssteller 6 oder über eine über den Leistungssteller geregelte Elektronik gesteuert wird.

Die Schaltung 5 weist zunächst einen, einem ersten Kondensator C1 nachgeschalteten und einem zweiten Kondensator C2 vorgeschalteten Triac T1 auf, wobei in der beispielhaften Schaltung ein erster, ungepolter Kondensator C1 mit einer Kapazität von 100 Nanofarad und ein zweiter, gepolter Kondensator C2, bspw. ein Elektrolytkondensator mit einer Kapazität von 220 Microfarad vorgesehen sind.

Dem Triac T1 ist ein erster Diac D1 vorgeschaltet.

Vor dem ersten Kondensator C1, welchem in Reihenschaltung ein Widerstand R1 zugeordnet ist, ist eine weitere Verbindung zum Nullpotential N ausgebildet, in welcher Verbindung ein zweiter Diac D6 angeordnet ist, welcher zweite Diac D6 Teil eines Opto-Kopplers IC1 ist.

Zwischen dem Triac T1 und dem zweiten Kondensator C2 ist ein Gleichrichter D3 in Form einer Diode angeordnet, wobei diesem Gleichrichter D3 ein Widerstand R5 nachgeschaltet ist.

In dem Opto-Koppler IC1 ist desweiteren ein Steuerelement D7 in Art eines optoelektronischen Elementes angeordnet, über welches der zweite Diac D6 gesteuert wird. Dieses Steuerelement D7 ist in der Zuleitung zum zweiten Kondensator C2 angeordnet, dies unter Zwischenschaltung eines weiteren Widerstandes R3.

In der Motorpotentialleitung M ist ein dritter Diac D4 angeordnet. Diesem sind in Reihe eine Diode D2 und ein Widerstand R4 nachgeschaltet.

Nachgeschaltet zu der Reihenanordnung von Diac D4, Diode D2 und Widerstand R4 sind ein weiterer Widerstand R6 sowie eine zu diesem Widerstand R6 parallele Leuchtdiode D5 vorgesehen.

Der gesamten Blockierschutzschaltung 5 ist zwischen dem Motorpotential M und dem Nullpotential N ein parallel geschalteter, ungepolter Kondensator C3 mit einer beispielhaften Kapazität von 100 Nanofarad parallel geschaltet.

Die Funktionsweise der erfindungsgemäßen Blockierschutzschaltung ist wie folgt:
Der Triac T1 wird über den Kondensator C1 und dem Diac D1 zu Beginn jeder Halbwelle gezündet. Der Motorstrom erzeugt hierbei einen Spannungsabfall an einem, dem Triac T1 nachgeschalteten Shunt-Widerstand R8.
Die Spannung wird über die Diode D3 gleichgerichtet und lädt über den Widerstand R5 den Kondensator C2 auf.
Sobald die Spannung am Kondensator C2 einen bestimmten Wert erreicht, zündet der Opto-Koppler (Opto-Triac) IC1. Hierdurch bricht die Spannung am Widerstand R2 zusammen, infolgedessen der Triac T1 sperrt.
Durch den hiernach entstehenden Spannungsabfall über den Triac T1 wird der Kondensator C2 über die Diode D2, den Diac D4, den Widerstand R4 und die Leuchtdiode D5 weiter geladen, so daß Selbsthaltung auftritt.
Nach Trennen der Schaltung von der Versorgungsspannung entlädt sich der Kondensator C2 über den Widerstand R7 sowie über den Widerstand R3 und das optoelektronische Steuerelement D7 im Opto-Koppler IC1, so daß die Schaltung erneut gestartet werden kann.
Die Verzögerung beim Anlaufstrom hängt von der durch den Widerstand R5 und den Kondensator C2 definierten Zeitkonstante ab.
Der Diac D4 verhindert, daß der Kondensator C2 bereits vor Erreichen der Zündspannung des Triacs T1 geladen wird.
Zufolge der zuvor beschriebenen erfindungsgemäßen Ausgestaltung ist eine Blockierschutzschaltung 5 angegeben, welche logisch aufgebaut als Zweipol ausgebildet ist. Diese Schaltung erweist sich als unempfindlich gegenüber elektrostatischer Aufladung.
Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Blockierschutzschaltung (5) für einen Elektromotor (2), insbesondere einen Elektromotor (2) eines Haushaltsgerätes, wie etwa eines Staubsaugers, wobei nachgeschaltet zu einem ersten Kondensator (C1) und vorgeschaltet zu einem zweiten Kondensator (C2) ein Triac (T1) vorgesehen ist, wobei weiter dem Triac (T1) ein erster Diac (D1) vorgeschaltet ist, **dadurch gekennzeichnet, dass** die Schaltung zweipolig, zwischen einem Motorpotential (M) und dem Nullpotential (N) ausgeführt ist und dass in einer Verbindung zum Nullpotential (N) ein zweiter Diac (D6) angeordnet ist, welcher Teil eines Opto-Kopplers (IC1) ist.

2. Blockierschutzschaltung nach Anspruch 1, **dadurch gekennzeichnet, dass** in der Motorpotentialleitung (M) ein Diac (D4) angeordnet ist, zur Verhinderung der Ladung des zweiten Kondensators (C2) vor Erreichen der Zündspannung des Triacs (T1).

3. Blockierschutzschaltung nach einem oder mehreren der vorhergehenden Ansprüche, **dadurch gekennzeichnet, dass** zwischen dem Triac (T1) und dem zweiten Kondensator (C2) ein Gleichrichter (D3) angeordnet ist.

4. Blockierschutzschaltung nach einem oder mehreren der vorhergehenden Ansprüche, **dadurch gekennzeichnet, dass** ein Steuerelement (D7) für den zweiten Diac (D6) in der Zuleitung zum zweiten Kondensator (C2) angeordnet ist.

5. Blockierschutzschaltung nach einem oder mehreren der vorhergehenden Ansprüche, **dadurch gekennzeichnet, dass** das Steuerelement (D7) ein optoelektronisches Element ist.

6. Blockierschutzschaltung nach einem oder mehreren der vorhergehenden Ansprüche, **dadurch gekennzeichnet, dass** das Steuerelement (D7) und der zweite Diac (D6) in einem Opto-Koppler (IC1) angeordnet sind.

## Claims

1. A protective circuit (5) for an electric motor (2) for protection in the event of jamming of the motor, in particular an electric motor (2) for a household appliance, such as for example a vacuum cleaner, a triac (T1) being connected after a first capacitor (C1) and before a second capacitor (C2), a first diac (D1) also being connected before the triac (T1), **characterized in that** the circuit is embodied in a two-pole manner between a motor potential (M) and the null potential (N) and **in that** a second diac (D6) is arranged connected to the null potential (N), the second diac being part of an opto-coupler (IC1).

2. A protective circuit according to Claim 1, **characterized in that** a diac (D4) is disposed in the motor voltage line (M) for preventing the charging of the second capacitor (C2) before the breakdown voltage of the triac (T1) is reached.

3. A protective circuit according to one or more of the preceding claims, **characterized in that** a rectifier (D3) is disposed between the triac (T1) and the second capacitor (C2).

4. A protective circuit according to one or more of the preceding claims, **characterized in that** a control device (D7) for the second diac (D6) is arranged in the supply to the second capacitor (C2).

5. A protective circuit according to one or more of the preceding claims, **characterized in that** the control device (D7) is an opto-electronic device.

6. A protective circuit according to one or more of the preceding claims, **characterized in that** the control device (D7) and the second diac (D6) are arranged in an opto-coupler (IC1).

## Revendications

1. Circuit de protection anti-blocage (5) pour un moteur électrique (2), en particulier un moteur électrique (2) d'un appareil domestique, tel que, par exemple, un aspirateur à poussière, un Triac (T1), étant prévu, branché en aval d'un premier condensateur (C1) et en amont d'un deuxième condensateur (C2), en outre en amont du Triac (T1) étant branché un premier Diac (D1), **caractérisé en ce que** le circuit est à deux pôles, entre un potentiel moteur (M) et le potentiel neutre (N), et **en ce que**, dans une liaison au potentiel neutre (N), est disposé un deuxième Diac (D6) faisant partie d'un opto-coupleur (IC1).

2. Circuit de protection anti-blocage selon la revendication 1, **caractérisé en ce que** dans, la ligne de potentiel de moteur (M), est disposé un Diac (D4), pour empêcher le chargement du deuxième condensateur (C2), avant l'atteinte de la tension d'allumage du Triac (T1).

3. Circuit de protection anti-blocage selon l'une ou plusieurs des revendications précédentes, **caractérisé en ce qu'**entre le Triac (T1) et le deuxième condensateur (C2) est disposé un redresseur (D3).

4. Circuit de protection anti-blocage selon l'une ou plusieurs des revendications précédentes, **caractérisé en ce qu'**un élément de commande (D7), pour le deuxième Diac (D6), est disposé dans la ligne d'alimentation au deuxième condensateur (C2).

5. Circuit de protection anti-blocage selon l'une ou plusieurs des revendications précédentes, **caractérisé en ce** l'élément de commande (D7) est un élément opto-électronique.

6. Circuit de protection anti-blocage selon l'une ou plusieurs des revendications précédentes, **caractérisé en ce que** l'élément de commande (D7) et le deuxième Diac (D6) sont disposés dans un opto-coupleur (IC1).
